# FASCICULE DE BREVET EUROPEEN

(11) **EP 1 482 160 B1**
(45) Date de publication et mention de la délivrance du brevet: **31.10.2012**
(21) Numéro de dépôt: 04291154.5
(22) Date de dépôt: 05.05.2004
(51) Int. Cl.: F02K 1/48

(54) **Tuyère de turbomachine à réduction de bruit**
Lärmmindernde Schubdüse für ein Flugtriebwerk
Noise reducing nozzle for a jet engine

(30) Priorité: 28.05.2003 FR 0306484
(43) Date de publication de la demande: 01.12.2004
(73) Titulaire: SNECMA, 75015 Paris (FR)
(72) Inventeur: Bardagi, Thierry, c/o Bat. A, esc. 2, appt. 65, 91000 Evry (FR); Dravet, Alain, 13170 Les Pennes Mirabeau (FR); Doussinault, Marc, 77350 Le Mee/Seine (FR)
(74) Mandataire: Joly, Jean-Jacques

(56) Documents cités:
- WO-A-00/40851
- FR-A- 1 084 419
- FR-A- 2 529 956
- US-A- 5 924 632
- US-A- 6 082 635

## Description

### Arrière-plan de l'invention

La présente invention se rapporte au domaine général des tuyères équipant les turbomachines. Elle vise plus particulièrement à réduire le bruit d'origine aérodynamique du jet engendré en sortie des tuyères à flux séparés de turbomachines d'avions, notamment pendant les phases de décollage de ces avions.

Les tuyères équipant les turbomachines d'avions se composent généralement d'un corps central entouré d'un capot primaire afin de former entre les deux un premier canal annulaire de dilution pour l'écoulement d'un flux primaire. Un capot secondaire entoure le capot primaire pour former un second canal annulaire de dilution pour l'écoulement d'un flux secondaire. Les flux primaire et secondaire se terminent, avant l'échappement, par une partie convergente, un col et une partie divergente. L'ensemble de ces éléments de la tuyère est généralement de forme axisymétrique. La présente invention se rapporte plus précisément aux tuyères dont le corps central est de type externe, c'est à dire dont le bord de fuite est localisé à l'aval du capot primaire.

La présente invention vise à réduire le bruit de jet engendré en sortie de ces tuyères, notamment pendant les phases de décollage des avions au cours desquelles la vitesse d'éjection des flux primaire et secondaire est fortement subsonique, c'est à dire de l'ordre de 0,9 Mach environ (régime haut subsonique). A ces vitesses d'écoulement, deux impératifs sont à respecter : il est nécessaire, d'une part de conserver des sections constantes en trois dimensions autant au niveau du col qu'au niveau de la partie divergente de la tuyère afin de maintenir les performances aérodynamiques de la tuyère et de garantir une conservation du débit, et d'autre part, de maintenir des sections transversales constantes sur toute la circonférence de la tuyère afin d'éviter des zones de survitesses locales. Ce second impératif implique que, quelques soient les plans de coupe azimutale, la section axisymétrique équivalente (mesurée sur la station du col) reste constante sur toute la circonférence de la tuyère. En effet, à un régime haut subsonique, les survitesses locales peuvent engendrer des pertes de performances aérodynamiques, voire des bruits parasites supplémentaires en cas de choc.

Afin de réduire le bruit de jet aérodynamique engendré en sortie des tuyères, il est connu de favoriser le mélange entre les flux primaire et secondaire issus de la turbomachine. A cet effet, le brevet US 5,924,632 propose notamment d'intégrer des lobes sur les capots primaire et secondaire, l'extrémité libre du corps central présentant différentes géométries possibles. De même, le brevet FR 2,529,956 décrit un système d'éjection à flux mélangés dont le capot primaire est muni de lobes et le corps central est partiellement muni d'ondulations. L'application de ces technologies à un écoulement des flux en haut subsonique n'est pas satisfaisante. En effet, les impératifs décrits ci-dessus ne sont pas respectés, notamment celui portant sur la conservation de sections transversales constantes sur toute la circonférence de la tuyère. Il en résulte des survitesses locales engendrant, à ce régime haut subsonique, des chocs qui sont à l'origine de bruits parasites supplémentaires et qui diminuent les performances aérodynamiques de la tuyère.

Voir aussi le document US-A-6 082 635.

### Objet et résumé de l'invention

La présente invention vise donc à pallier de tels inconvénients en proposant une tuyère à flux séparés permettant d'obtenir une réduction du bruit de jet, notamment à régime haut subsonique, en favorisant le mélange entre les flux par la création de cisaillements et d'effets turbulents tout en respectant les impératifs de conservation du débit et des sections transversales sur toute la circonférence de la tuyère.

A cet effet, il est prévu une tuyère de turbomachine comportant un capot primaire sensiblement cylindrique s'étendant selon un axe longitudinal de la tuyère, un corps central disposé concentriquement à l'intérieur du capot primaire et s'étendant au-delà d'une extrémité libre du capot primaire par une partie sensiblement conique afin de définir, entre le capot primaire et le corps central, un premier canal annulaire de dilution pour l'écoulement d'un flux primaire ayant une section transversale sensiblement constante sur toute la circonférence de la tuyère, et un capot secondaire entourant concentriquement le capot primaire afin de définir un second canal annulaire de dilution pour l'écoulement d'un flux secondaire, l'extrémité libre du capot primaire présentant une surface comportant une première série d'ondulations régulièrement réparties autour de l'axe longitudinal de la tuyère, la première série d'ondulations étant formée d'ondulations négatives qui s'étendent radialement vers l'intérieur par rapport au capot primaire, en alternance avec des ondulations positives qui s'étendent radialement vers l'extérieur par rapport au capot primaire. Selon l'invention, le corps central présente, au moins au niveau d'une partie en vis-à-vis de ladite surface ondulée de l'extrémité libre du capot primaire, une seconde série d'ondulations régulièrement réparties autour de l'axe longitudinal de la tuyère, la seconde série d'ondulations étant formée d'ondulations négatives qui s'étendent radialement vers l'intérieur par rapport au corps central, en alternance avec des ondulations positives qui s'étendent radialement vers l'extérieur par rapport au corps central, les ondulations négatives et positives des première et seconde série d'ondulations ayant une hauteur radiale variant angulairement et étant disposées de sorte que les ondulations négatives de la première série d'ondulations sont disposées en vis-à-vis des ondulations négatives de la seconde série d'ondulations et inversement afin de générer entre les flux primaire et secondaire, en aval des ondulations, une turbulence et un cisaillement radial tout en conservant une section transversale constante sur toute la circonférence de la tuyère.

Ainsi, l'intégration d'ondulations négatives et positives sur le capot primaire et sur le corps central permet de générer un important mélange entre les flux primaire et secondaire. Cet important mélange est notamment obtenu par un cisaillement radial entre les flux et par une turbulence au niveau des écoulements en sortie de la tuyère. Ces ondulations permettent également de diminuer la vitesse des écoulements sur l'axe longitudinal de la tuyère afin d'accentuer le mélange en sortie de la tuyère. Par ailleurs, le débit des flux primaire et secondaire est conservé et la section transversale reste constante sur toute la circonférence de la tuyère de sorte que les performances aérodynamiques de la tuyère ne sont pas affectées par ces ondulations et que tout risque de survitesse locale est évité.

La surface ondulée du corps central peut s'étendre longitudinalement sur toute la longueur ou sur une partie seulement de la partie conique du corps central.

Dans le cas où la surface ondulée ne s'étend que partiellement sur la partie conique du corps central, la surface non ondulée de cette partie conique peut comporter une pluralité de bras sensiblement rectangulaires s'étendant longitudinalement au-delà d'une extrémité libre de la partie conique du corps central dans le sens de leur longueur et radialement dans le sens de leur largeur, et s'entrecoupant sur l'axe longitudinal de la tuyère. Ces bras permettent ainsi d'augmenter l'amplitude du cisaillement radial entre les flux primaire et secondaire. Les bras sont de préférence de mêmes longueurs et de mêmes largeurs et sont symétriques par rapport à l'axe longitudinal de la tuyère.

Avantageusement, les bras sont disposés dans le prolongement des ondulations négatives de la seconde série d'ondulations. En effet, à l'aval de ces ondulations négatives, l'écoulement du flux primaire a tendance à se diriger vers l'extérieur de la paroi de la partie conique du corps central ce qui génère un cisaillement radial entre les flux. La présence de bras dans le prolongement de ces ondulations négatives permet d'augmenter cette déviation externe de l'écoulement et donc d'accroître l'effet de cisaillement radial.

Selon une caractéristique avantageuse de l'invention, les bras présentent, au niveau d'une extrémité libre, des moyens permettant de générer un cisaillement radial supplémentaire entre les flux primaire et secondaire. Ces moyens de cisaillement supplémentaire peuvent être des fentes longitudinales formant un angle avec l'axe longitudinal de la tuyère tourné vers l'aval de celle-ci. L'écoulement induit à proximité de ces fentes est ainsi dévié dans la direction de ces fentes. Un cisaillement radial supplémentaire va donc s'opérer entre l'écoulement qui se trouve au voisinage de ces fentes (écoulement s'écartant de l'axe longitudinal de la tuyère) et celui situé entre les bras (écoulement se rapprochant de l'axe longitudinal de la tuyère). Les moyens de cisaillement supplémentaire peuvent aussi prendre la forme d'ailettes longitudinales qui permettent également d'accentuer le cisaillement à leur voisinage et de diminuer la vitesse d'écoulement sur l'axe longitudinal de la tuyère à l'aval des bras.

Selon une autre caractéristique avantageuse de l'invention, l'extrémité libre du capot primaire comporte, en aval de la première série d'ondulations, une série de languettes formée de languettes négatives disposées dans le prolongement des ondulations négatives de la première série d'ondulations en alternance avec des languettes positives disposées dans le prolongement des ondulations positives de la première série d'ondulations. Ces languettes permettent d'augmenter l'amplitude du cisaillement entre les flux primaire et secondaire, notamment pour les moyennes et hautes fréquences. En effet, les languettes viennent interférer simultanément dans les flux primaire et secondaire. Les déviations des zones d'écoulement côté flux primaire et côté flux secondaire ainsi engendrées sont le siège d'un cisaillement radial important entre elles et un fort mélange des flux s'opèrent entre chaque zone d'écoulement délimitées par les languettes. Les languettes peuvent par exemple avoir une forme d'écope ou bien de chevron.

Selon encore une autre caractéristique avantageuse de l'invention, les ondulations de la seconde série d'ondulations présentent une torsion angulaire par rapport à l'axe longitudinal de la tuyère de façon à générer une giration de l'écoulement du flux primaire. Une telle giration, cumulée au cisaillement et à la turbulence au niveau des flux primaire et secondaire, permet d'accroître le mélange en sortie de la tuyère et donc d'augmenter la réduction du bruit engendré. De préférence, les ondulations de la première série d'ondulations présentent en outre une torsion angulaire équivalente à celle des ondulations de la seconde série de façon à générer une giration des écoulements des flux primaire et secondaire. Une autre manière d'engendrer selon l'invention une giration des écoulements des flux primaire et secondaire est de munir les ondulations négatives et positives de la première série d'ondulations d'au moins une échancrure ou d'au moins une ailette directrice formant un angle avec l'axe longitudinal de la tuyère.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en perspective d'une tuyère de turbomachine selon un premier mode de réalisation de l'invention ;
- les figures 2A et 2B sont des vues en coupe respectivement transversale et longitudinale de la tuyère de la figure 1 ;
- la figure 3 est une vue en perspective d'une tuyère de turbomachine selon un deuxième mode de réalisation de l'invention;
- les figures 4 et 5 sont des vues en perspective de la tuyère de la figure 3 selon deux variantes de réalisation ;
- les figures 6A et 6B sont des vues respectivement en perspective et en en coupe transversale du capot primaire d'une tuyère selon un troisième mode de réalisation de l'invention;
- les figures 7A et 7B sont des vues respectivement en perspective et en en coupe transversale du capot primaire d'une tuyère selon une variante du troisième mode de réalisation de l'invention ;
- la figure 8 est une vue en perspective d'une tuyère selon un quatrième mode de réalisation de l'invention ;
- la figure 9 est une vue en perspective d'une tuyère selon un cinquième mode de réalisation de l'invention;
- la figure 10 est une vue en perspective du capot primaire d'une tuyère selon un sixième mode de réalisation de l'invention ; et
- la figure 11 est une vue partielle et en perspective d'une variante du capot primaire de la figure 10.

### Description détaillée d'un mode de réalisation

De façon connue en soi, une turbomachine (non illustrée sur les figures) comporte une soufflante entraînée en rotation par un générateur de gaz placé en amont de la soufflante. Typiquement, le générateur de gaz comprend un compresseur, une chambre de combustion et une turbine. Un capot primaire est placé circulairement autour du générateur de gaz et un corps central est fixé à une extrémité amont du générateur de gaz. Le corps central est disposé concentriquement à l'intérieur du capot primaire afin de délimiter un premier canal annulaire pour l'évacuation des gaz de combustion issus du générateur de gaz. Ces gaz de combustion forment le flux primaire de la turbomachine. De même, une nacelle ou capot secondaire est disposée concentriquement autour du capot primaire. Le capot secondaire est espacé radialement du capot primaire afin de délimiter un second canal annulaire pour l'évacuation de l'air de dilution de la soufflante de la turbomachine. L'air de la soufflante constitue le flux secondaire de la turbomachine. Le corps central et les capots primaire et secondaire de la turbomachine forment ainsi la tuyère d'éjection de la turbomachine.

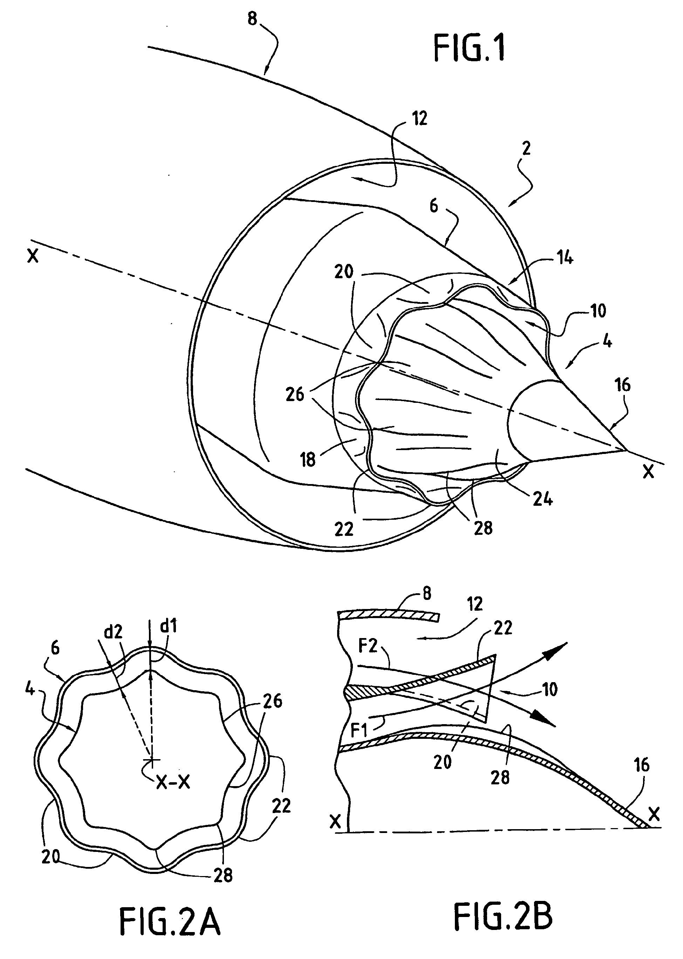

Les figures 1, 2A et 2B représentent une tuyère de turbomachine selon un premier mode de réalisation de l'invention. Comme expliqué précédemment, cette tuyère 2, de forme axisymétrique par rapport à un axe longitudinal X-X, se compose d'un corps central 4, d'un capot primaire 6 et d'un capot secondaire 8 qui ont généralement une forme cylindrique et qui sont disposés concentriquement les uns par rapport aux autres.

Sur la figure 1, les références 10 et 12 désignent respectivement le premier canal annulaire de dilution pour l'écoulement du flux primaire et le second canal annulaire de dilution pour l'écoulement du flux secondaire de la turbomachine. Le corps central 4 de la tuyère est de type externe, c'est à dire que son bord de fuite s'étend longitudinalement au-delà d'une extrémité libre 14 du capot primaire 6. Il se termine par une partie 16 sensiblement conique. Par ailleurs, le capot secondaire 8 de la tuyère représentée sur les figures 1 et 2B ne s'étend pas sur toute la longueur du capot primaire 6. Toutefois, l'invention peut également s'appliquer à une tuyère dont le capot secondaire s'étend sur toute la longueur du capot primaire, voire au-delà de celui-ci.

La tuyère d'éjection 2 permet de séparer les flux primaire et secondaire issus de la turbomachine. Au niveau de l'extrémité libre 14 du capot primaire 6, les gaz de combustion formant le flux primaire se mélangent avec l'air de dilution du flux secondaire. La géométrie axisymétrique de la tuyère a tendance à engendrer un bruit important en aval du capot primaire, notamment pendant les phases de décollage des avions.

La présente invention vise une géométrie particulière du corps central 4 et du capot primaire 6 de la tuyère permettant de diminuer ce bruit engendré en sortie de tuyère tout en conservant des performances aérodynamiques acceptables.

Selon un premier aspect de l'invention, l'extrémité libre 14 du capot primaire 6 présente une surface 18 comportant une première série d'ondulations régulièrement réparties autour de l'axe longitudinal X-X de la tuyère. Cette première série d'ondulations est formée d'ondulations négatives 20, de préférence au nombre de huit, qui s'étendent radialement vers l'intérieur par rapport au capot primaire 6 et qui sont disposées en alternance avec autant d'ondulations positives 22. Ces ondulations positives s'étendent radialement vers l'extérieur par rapport au capot primaire. Comme illustré sur la figure 1, les plis formés par la première série d'ondulations s'estompent progressivement en amont de la surface ondulée 18 afin de retrouver la forme originelle sensiblement cylindrique du capot primaire 6.

Selon un autre aspect de l'invention, le corps central 4 présente, au moins au niveau d'une partie 24 en vis-à-vis de la surface ondulée 18 de l'extrémité libre 14 du capot primaire 6, une seconde série d'ondulations régulièrement réparties autour de l'axe longitudinal X-X de la tuyère. Cette seconde série d'ondulations est également formée d'ondulations négatives 26 qui s'étendent radialement vers l'intérieur par rapport au corps central 4, en alternance avec des ondulations positives 28 qui s'étendent radialement vers l'extérieur par rapport au corps central. Les plis formés sur la partie 24 du corps central 4 de la tuyère sont réalisés de sorte que les ondulations négatives 20 de la première série d'ondulations sont disposées en vis-à-vis des ondulations négatives 26 de la seconde série d'ondulations et inversement. De même que pour les plis formés sur le capot primaire 6, les plis formés sur la partie 24 du corps central 4 s'estompent progressivement vers l'amont. Sur la figure 1, ces mêmes plis s'estompent aussi vers l'aval afin de retrouver la forme originelle de la partie conique 16 du corps central. Néanmoins, on peut également imaginer que la surface ondulée 24 du corps central 4 s'étend longitudinalement sur toute la partie conique 16 du corps central.

Les plis formés à la fois sur le capot primaire 6 et sur le corps central 4 permettent ainsi de générer, en aval de ces ondulations, un cisaillement radial entre les écoulements des flux primaire et secondaire. Par cisaillement radial, on entend, pour la suite de la description, que celui-ci s'applique selon une direction radiale par rapport à la géométrie sensiblement cylindrique de la tuyère.

Un tel cisaillement radial est notamment illustré sur la figure 2B dans laquelle les flèches F1 et F2 représentent la direction d'écoulement respective des flux primaire et secondaire. Une turbulence entre les flux primaire et secondaire est en outre provoquée à l'aval des surfaces ondulées du capot primaire et du corps central. Les ondulations ou plis ont également tendance à réduire la vitesse des écoulements primaire et secondaire sur l'axe longitudinal X-X du moteur en sortie de la tuyère. Ainsi, la combinaison des effets de la turbulence et du cisaillement radial, associée à une réduction de la vitesse axiale des flux, permet d'aboutir à un meilleur mélange des flux primaire et secondaire et conduit donc à une réduction du bruit de jet émis par la tuyère. L'amplitude (ou hauteur radiale) des plis formés sur le capot primaire 6 et sur le corps central 4 de la tuyère est par ailleurs optimisée afin de limiter les décollements des flux et d'éviter tout risque de survitesses au niveau de ces plis.

Toujours selon l'invention, on notera en outre, en se référant notamment à la figure 2A, que les ondulations positives et négatives de la première et de la seconde séries d'ondulations présentent une hauteur radiale (ou amplitude) variant angulairement sur toute la circonférence de la tuyère. Cette caractéristique de l'invention permet de conserver des sections transversales équivalentes sur toute la circonférence de la tuyère. Ainsi, la distance radiale entre la surface ondulée 18 du capot primaire 6 et la surface ondulée 24 du corps central 4 varie sur toute la circonférence de la tuyère. Notamment, la distance radiale d1 entre l'une quelconque des ondulations positives 22 du capot primaire et l'ondulation positive 28 du corps central disposée en vis à vis est sensiblement différente de la distance radiale d2 entre l'une quelconque des ondulations négatives 20 du capot primaire et l'ondulation négative 26 correspondante du corps central. En effet, les distances d1 et d2 sont choisies de sorte que les couronnes tracées à partir de d1 et de d2 présentent des sections identiques. D'autre part, le tracé des ondulations formées sur le capot primaire et sur le corps central de la tuyère est tel que les sections en trois dimensions au niveau du col et de la partie divergente de la tuyère sont conservées par rapport à une tuyère de forme axisymétrique.

De la sorte, les performances aérodynamiques de la tuyère ne sont pas affectées par ces ondulations, le débit des flux primaire et secondaire est conservé et tout risque de survitesse locale est évité, notamment à un régime haut subsonique. Des essais réalisés en soufflerie ont montré une réduction cumulée de bruit de l'ordre de 3,4 dB par rapport à une tuyère axisymétrique existante à corps central externe et de l'ordre de 5,4 dB par rapport à une tuyère axisymétrique existante à corps central interne.

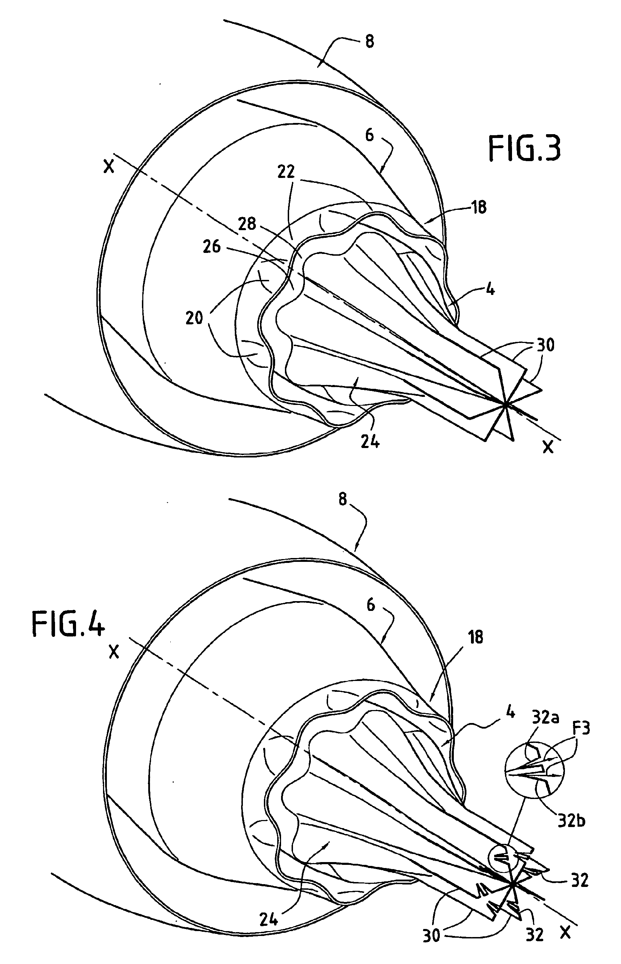

La figure 3 représente une tuyère selon un deuxième mode de réalisation de l'invention. Dans ce mode de réalisation, le corps central 4 et le capot primaire 6 de la tuyère comporte les mêmes surfaces ondulées 18, 24 que la tuyère illustrée sur la figure 1. En particulier, la surface ondulée 24 du corps central 4 ne s'étend longitudinalement que partiellement sur la partie conique du corps central.

Selon ce mode de réalisation, la surface non ondulée de la partie conique du corps central 4 formant sa partie terminale comporte une pluralité de bras 30 permettant d'augmenter l'amplitude du cisaillement radial entre les écoulements des flux primaire et secondaire. Ces bras 30 ont une forme sensiblement rectangulaire : d'une part, ils s'étendent longitudinalement dans le sens de leur longueur au-delà d'une extrémité libre de la partie conique 16 du corps central 4, et d'autre part, ils s'étendent radialement dans le sens de leur largeur. Les bras s'entrecoupent sur l'axe longitudinal X-X de la tuyère et sont avantageusement de mêmes longueurs et de mêmes largeurs. Par ailleurs, ils sont de préférence symétriques par rapport à l'axe longitudinal X-X de la tuyère et leur épaisseur est relativement faible par rapport à leurs autres dimensions afin de ne pas dégrader les performances aérodynamiques de la tuyère.

Le nombre de bras 30 peut être indépendant du nombre de plis formés sur le corps central 4 et leur disposition angulaire (ou azimutale) peut varier selon les cas. Toutefois, il apparaît avantageux de positionner ces bras 30 dans le prolongement des ondulations négatives 26 du corps central 4, le nombre de bras devenant donc proportionnel au nombre d'ondulations.

Cette disposition particulière est illustrée sur la figure 3 : le corps central 4 comporte, au niveau de sa la surface ondulée 24, huit ondulations négatives 26 et, au niveau de sa surface non ondulée, huit bras 30 symétriques par rapport à l'axe longitudinal X-X et disposés dans le prolongement de ces ondulations négatives. Un tel agencement présente l'avantage d'augmenter sensiblement le cisaillement radial généré à l'aval de la tuyère et donc de participer à la réduction du bruit généré en sortie de la tuyère, notamment au niveau des basses fréquences (par diminution notable de la vitesse axiale à l'aval du corps central). En effet, à l'aval des ondulations négatives 26 du corps central 4, l'écoulement des flux primaire et secondaire a tendance à se diriger en dehors de l'axe longitudinal X-X de la tuyère, ce qui provoque un cisaillement radial entre les flux. Les bras 30, disposés dans le prolongement de ces ondulations négatives, vont ainsi participer à accentuer ce cisaillement. On notera également, qu'au niveau des secteurs angulaires définis entre les bras, une turbulence supplémentaire se créé entre ces bras et se combine à l'effet de cisaillement pour participer à la réduction du bruit.

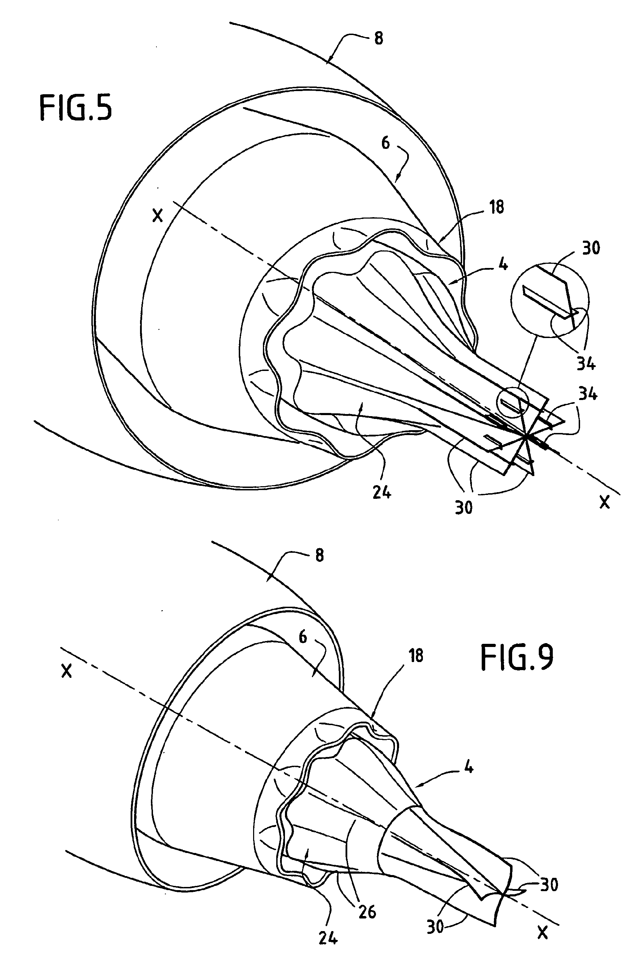

Selon deux variantes de ce deuxième mode de réalisation de l'invention illustrées par les figures 4 et 5, il est en outre possible d'aménager, au niveau du bord de fuite des bras 30, des moyens permettant de générer un cisaillement radial supplémentaire entre les flux primaire et secondaire tout en réduisant la vitesse axiale à l'aval du corps central.

Sur l'exemple de réalisation de cette variante représenté par la figure 4, des fentes ou entailles longitudinales 32 sont ainsi pratiquées à l'extrémité libre des bras 30. Ces fentes 32 forment un angle avec l'axe longitudinal X-X de la tuyère. Afin d'éviter un décollement dans la partie divergente de la tuyère, cet angle est par exemple compris entre 0° et 5°. De plus, cet angle est tourné vers l'aval de la tuyère, c'est à dire vers l'extérieur de l'axe longitudinal X-X de la tuyère. L'écoulement F3 des flux primaire et secondaire induit à proximité des fentes 32 est ainsi canalisé dans la direction de ces fentes. De ce fait, un cisaillement radial supplémentaire va être généré au voisinage du bord de fuite des bras 30 entre l'écoulement induit au voisinage des bras (écoulement s'écartant de l'axe longitudinal X-X de la tuyère) et celui situé entre les bras (écoulement se rapprochant de l'axe longitudinal X-X). On notera également, qu'en plus de générer un cisaillement radial supplémentaire, la présence de ces fentes permet de diminuer la répartition de la vitesse axiale d'écoulement des flux primaire et secondaire en aval du corps central de la tuyère.

Le nombre, la forme, la longueur et l'angle d'écartement par rapport à l'axe longitudinal X-X des fentes 32 peuvent en outre varier selon les cas. Sur l'exemple de la figure 4, les bras 30 présentent ainsi chacun au moins quatre fentes 32 disposées deux à deux symétriquement par rapport à l'axe longitudinal X-X de la tuyère. Dans ce cas, il est préférable d'incliner les fentes 32a les plus éloignées de l'axe longitudinal X-X d'un angle plus important que les fentes 32b les plus proches de cet axe longitudinal. Cette caractéristique avantageuse permet de dévier graduellement l'écoulement induit dans cette zone et donc d'éviter les décollements des flux.

Alternativement, les moyens permettant de générer un cisaillement radial supplémentaire peuvent être réalisés sous la forme d'ailettes longitudinales 34 comme illustré sur la figure 5. Dans le sens de leur largeur, ces ailettes 34 sont disposées perpendiculairement aux bras 30. Dans le sens de leur longueur, les ailettes peuvent être parallèles à l'axe longitudinal X-X ou inclinées par rapport à celui-ci d'un angle divergent de 5° au maximum.

Le nombre, la longueur, la largeur, l'emplacement sur les bras et le profil des ailettes 34 peuvent varier selon les cas. En particulier, les ailettes 34 peuvent être situées sur l'extrémité libre des bras 30 ou bien s'étendre sur la totalité de la longueur des bras afin d'en augmenter artificiellement l'épaisseur et donc d'accentuer le cisaillement radial. Sur l'exemple de la figure 5, les bras 30 peuvent présenter chacun au moins deux ailettes 34 symétriques par rapport à l'axe longitudinal X-X de la tuyère.

La fonction de ces ailettes 34 est identique à celle des fentes décrites précédemment : elles permettent de générer un cisaillement radial supplémentaire et de diminuer la vitesse axiale d'écoulement des flux en aval du corps central de la tuyère dans les mêmes conditions que les fentes. Par contre, elles présentent une surface mouillée plus importante que des fentes et permettent donc d'augmenter le cisaillement radial.

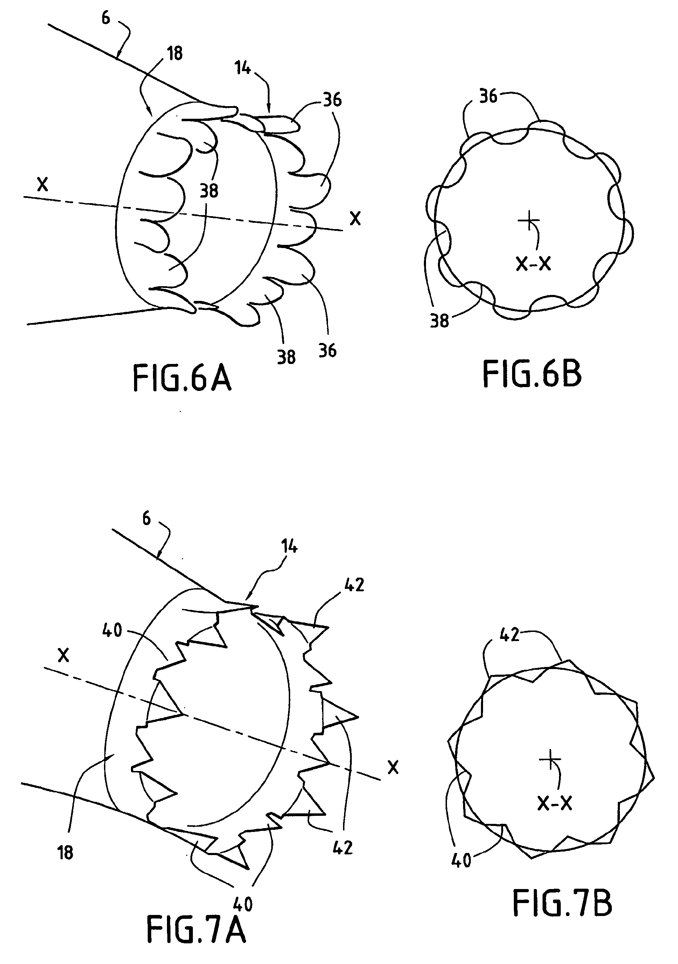

On se réfère maintenant aux figures 6A, 6B et 7A, 7B qui illustrent partiellement une tuyère selon un troisième mode de réalisation de l'invention. Pour des raisons de clarté, seul le capot primaire 6 de la tuyère est représenté sur ces figures. Bien entendu, le corps central et le capot primaire présentent toujours des surfaces ondulées selon le principe général de l'invention défini en liaison avec la figure 1. Ainsi, l'extrémité libre 14 du capot primaire 6 selon ce mode de réalisation de l'invention présente une surface 18 munie de la première série d'ondulations (cette série d'ondulations n'est toutefois pas représentée sur les figures 6A et 7A). En outre, le corps central peut comporter des bras éventuellement munis de fentes ou d'ailettes comme illustré sur les figures 3 à 5.

Selon ce troisième mode de réalisation de l'invention, l'extrémité libre 14 du capot primaire comporte, en aval de la première série d'ondulations, une série de languettes formée de languettes négatives 36, 40 disposées dans le prolongement des ondulations négatives de la première série d'ondulations en alternance avec des languettes positives 38, 42 disposées dans le prolongement des ondulations positives de la première série d'ondulations. De la sorte, les languettes négatives 36, 40 s'étendent radialement vers l'intérieur par rapport au capot primaire, tandis que les languettes positives 38, 42 s'étendent radialement vers l'extérieur par rapport au capot primaire. Le nombre de languettes correspond donc au nombre d'ondulations du capot primaire. De plus, la forme des languettes est variable : l'extrémité libre des languettes peut par exemple être arrondie de façon à former des écopes négatives 36 et positives 38 (figures 6A, 6B) ou bien être pointue de façon à former des chevrons négatifs 40 et positifs 42 (figures 7A, 7B).

Les languettes, ainsi aménagées sur le bord de fuite du capot primaire 6 de la tuyère, permettent d'augmenter l'amplitude du cisaillement radial entre les flux primaire et secondaire et donc d'accentuer la diminution du bruit engendré en sortie de la tuyère, notamment au niveau des moyennes et hautes fréquences (par augmentation du mélange entre les flux hors de la zone axiale du jet). En effet, ces languettes viennent interférer simultanément avec les écoulements du flux primaire et du flux secondaire. Les déviations internes et externes des écoulements sont par conséquent sensiblement augmentées par rapport à une surface simplement ondulée et la surface mouillée est réduite par rapport à des ondulations qui se prolongeraient au même niveau que ces languettes. Ceci permet donc de réduire les pertes par frottement aérodynamique. Les déviations des écoulements côtés flux primaire et flux secondaire sont ainsi le siège d'un cisaillement radial important entre elles ce qui augmente le mélange entre chaque zone d'écoulement délimitée par les languettes.

Par ailleurs, les languettes étant disposées dans le prolongement des ondulations, tout problème de rupture de pente pouvant provoquer des décollements des flux est évité. On notera également que l'utilisation d'écopes présente un double avantage par rapport aux chevrons : d'une part la surface mouillée est plus importante ce qui entraîne une déviation des écoulements plus importante, et d'autre part, l'utilisation d'écopes est plus sécurisante pour les manipulations manuelles.

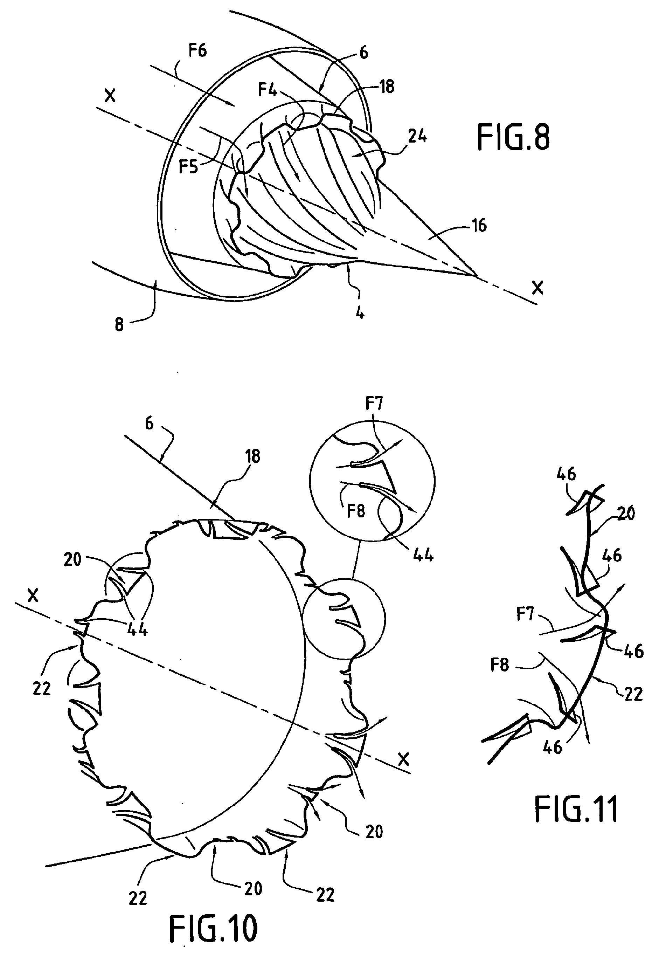

Selon un quatrième mode de réalisation de l'invention illustré par la figure 8, on introduit une torsion angulaire ou courbure azimutale au niveau des première et seconde série d'ondulations de façon à générer une giration des écoulements des flux primaire et secondaire en sortie de tuyère.

Sur la figure 8, on remarque que les ondulations positives et négatives des surfaces ondulées 18 et 24 du capot primaire 6 et du corps central 4 ont subi une même torsion angulaire par rapport à l'axe longitudinal X-X de la tuyère. La torsion angulaire des surfaces ondulées 18 et 24 peut par exemple être réalisée dans le sens inverse de celui de l'écoulement incident sortant de bras de carter d'une turbine de la turbomachine.

Ainsi, sur la figure 8, les écoulements F4 et F5 des flux primaire et secondaire le long du capot primaire 6 et du corps central 4 de la tuyère subissent une giration dans le sens inverse de l'écoulement incident sortant des bras de carter de la turbine (non représenté). Cette giration des écoulements permet d'augmenter l'effet de cisaillement entre les flux primaire et secondaire et d'augmenter le phénomène de turbulence en aval de la tuyère. En effet, dans le cas de surfaces ondulées du capot primaire et du corps central qui ne présentent pas de torsion angulaire (comme sur la figure 1 par exemple), les écoulements primaire et secondaire restent globalement dirigés suivant l'axe longitudinal X-X de la tuyère.

Sur la figure 8, le fait de « vriller » les surfaces ondulées 18, 24 du capot primaire et du corps central de la tuyère permet d'induire une giration sur les écoulements des flux primaire et secondaire. La conséquence d'une telle giration est de générer, en plus du cisaillement radial induit par les ondulations, une zone de cisaillement tangentiel entre les flux primaire et secondaire et le flux d'air externe à la tuyère, ce dernier étant dirigé, comme indiqué par la flèche F6, selon l'axe longitudinal X-X de la tuyère. Par cisaillement tangentiel, on entend que celui-ci s'applique selon une direction tangentielle par rapport à la géométrie sensiblement cylindrique de la tuyère.

De plus, sur la figure 8, la torsion angulaire est introduite à la fois au niveau de la surface ondulée 18 du capot primaire 6 et au niveau de la surface ondulée 24 du corps central 4. Toutefois, il est également possible d'envisager que seule la surface ondulée 24 du corps central 4 de la tuyère présente une torsion angulaire. Dans ce cas non représenté sur les figures, il est nécessaire, pour le respect des sections, que la torsion angulaire du corps central 4 débute à partir de la section d'échappement du capot primaire 6. La torsion angulaire est alors générée seulement le long de l'écoulement du flux primaire, l'écoulement du flux secondaire étant dirigé le long de l'axe longitudinal de la tuyère. Ce mode de réalisation permet ainsi de créer une zone de cisaillement tangentiel entre le flux primaire et le flux secondaire.

Selon un cinquième mode de réalisation de l'invention représenté par la figure 9, on peut aussi imaginer, en partant d'une géométrie de la tuyère comportant des bras 30 au niveau du corps central comme définis précédemment, que ces bras présentent une torsion angulaire.

Sur cette figure 9, le corps central 4 comporte deux bras 30 perpendiculaires et disposés chacun dans le prolongement d'ondulations négatives 26 du corps central. Ces bras présentent chacun une torsion angulaire. Ainsi, l'écoulement du flux primaire adhérent au corps central 4 va subir une giration ce qui va générer une turbulence supplémentaire à l'aval de la tuyère. Un cisaillement tangentiel va en outre s'opérer entre le flux primaire qui est « vrillé » et le flux secondaire qui dirigé le long de l'axe longitudinal X-X de la tuyère. Ces deux effets (cisaillement et tourbillon) se combinant entre eux, une forte atténuation du bruit aéronautique est obtenue. En effet, des essais réalisés en soufflerie ont montré une réduction cumulée de bruit de l'ordre de 3,8 dB par rapport à une tuyère axisymétrique existante à corps central externe et de l'ordre de 5,8 dB par rapport à une tuyère axisymétrique existante à corps central interne.

Par ailleurs, il peut également être envisagé de prévoir des bras ayant une double torsion angulaire : une première torsion dans le sens de rotation des aiguilles d'une montre et une seconde rotation dans le sens inverse. Ainsi, les courbures opposées des bras vont induire, sur l'écoulement induit à proximité, une giration dans les deux sens possibles qui accentuera sensiblement l'effet de turbulence.

Les figures 10 et 11 représentent un capot primaire 6 d'une tuyère selon un sixième mode de réalisation de l'invention. Pour des raisons de clarté, seul le capot primaire 6 de la tuyère est représenté sur ces figures. Bien entendu, le corps central comporte toujours une surface ondulée selon le principe général de l'invention défini en liaison avec la figure 1.

Sur la figure 10, chaque ondulation négative 20 et positive 22 de la surface ondulée 18 du capot primaire 6 de la tuyère comportent des échancrures 44 formant un angle avec l'axe longitudinal X-X de la tuyère. Ces échancrures 44 (au nombre de deux par ondulation sur la figure 10) permettent de diriger l'écoulement de flux induit à leur proximité vers l'extérieur de l'axe longitudinal suivant une déviation angulaire. L'écoulement induit à proximité est ainsi « canalisé » dans la direction de ces échancrures et il est le siège d'un mouvement giratoire qui se répercute sur les écoulements adjacents.

Sur la figure 11, qui ne représente que partiellement le capot primaire, les échancrures sont remplacées par des ailettes directrices 46 formant également un angle avec l'axe longitudinal X-X de la tuyère. De la même manière que pour les échancrures, ces ailettes directrices 46 (au nombre de deux par ondulation sur la figure 11) permettent également de générer une giration des écoulements induits à leur proximité. Toutefois, les ailettes directrices, qui présentent une surface mouillée supérieure aux échancrures, ont un effet de giration plus efficace que les échancrures.

Par ailleurs, sur les figures 10 et 11, les deux échancrures 44 ou ailettes directrices 46 par ondulation sont inclinées par rapport à l'axe longitudinal X-X selon deux directions opposées F7 et F8. Cette caractéristique permet de générer des zones de giration dans ces deux directions de sorte qu'une zone de dépression se créé entre ces deux zones de giration. Cette zone de dépression favorise le mélange entre les flux en aval du capot primaire.

La présente invention permet ainsi de diminuer sensiblement le bruit généré en sortie de la tuyère en favorisant le mélange entre les flux primaire et secondaire issus de la turbomachine. Cet important mélange est obtenu en créant un cisaillement radial et tangentiel entre les flux primaire et secondaire et en jouant sur la turbulence et la vitesse axiale des écoulements.

Par ailleurs, il est possible de combiner les différentes caractéristiques présentées sur les figures 1 à 11 afin d'obtenir une grande variété de géométries possibles de tuyère. A cet effet, on notera notamment que les différents aménagements prévus sur le bord de fuite du corps central de la tuyère permettent de jouer sur les basses fréquences du bruit généré en sortie de la tuyère, tandis que les différentes caractéristiques prévues sur le bord de fuite du capot primaire influent sur les moyennes et hautes fréquences.

## Revendications

1. Tuyère de turbomachine comportant :
un capot primaire (6) sensiblement cylindrique s'étendant selon un axe longitudinal (X-X) de ladite tuyère,
un corps central (4) disposé concentriquement à l'intérieur dudit capot primaire et s'étendant au-delà d'une extrémité libre (14) dudit capot primaire par une partie sensiblement conique (16) afin de définir, entre ledit capot primaire (6) et ledit corps central (4), un premier canal annulaire de dilution (10) pour l'écoulement d'un flux primaire ayant une section transversale sensiblement constante sur toute la circonférence de ladite tuyère, et
un capot secondaire (8) entourant concentriquement ledit capot primaire (6) afin de définir un second canal annulaire de dilution (12) pour l'écoulement d'un flux secondaire,
ladite extrémité libre (14) du capot primaire (6) présentant une surface (18) comportant une première série d'ondulations régulièrement réparties autour dudit axe longitudinal (X-X) de la tuyère, ladite première série d'ondulations étant formée d'ondulations négatives (20) qui s'étendent radialement vers l'intérieur par rapport audit capot primaire, en alternance avec des ondulations positives (22) qui s'étendent radialement vers l'extérieur par rapport audit capot primaire ;
ladite tuyère étant **caractérisée en ce que** ledit corps central (4) présente, au moins au niveau d'une partie (24) en vis-à-vis de ladite surface ondulée (18) de l'extrémité libre (14) du capot primaire (6), une seconde série d'ondulations régulièrement réparties autour dudit axe longitudinal (X-X) de la tuyère, ladite seconde série d'ondulations étant formée d'ondulations négatives (26) qui s'étendent radialement vers l'intérieur par rapport audit corps central, en alternance avec des ondulations positives (28) qui s'étendent radialement vers l'extérieur par rapport audit corps central, lesdites ondulations négatives (20, 26) et positives (22, 28) desdites première et seconde série d'ondulations ayant une hauteur radiale variant angulairement et étant disposées de sorte que les ondulations négatives (20) de ladite première série d'ondulations sont disposées en vis à vis des ondulations négatives (26) de ladite seconde série d'ondulations et inversement afin de générer entre lesdits flux primaire et secondaire, en aval desdites ondulations, une turbulence et un cisaillement radial tout en conservant une section transversale constante sur toute la circonférence de ladite tuyère.

2. Tuyère selon la revendication 1, **caractérisée en ce que** la surface ondulée (24) du corps central (4) s'étend longitudinalement sur toute la partie conique (16) dudit corps central.

3. Tuyère selon la revendication 1, **caractérisée en ce que** la surface ondulée (24) du corps central (4) s'étend longitudinalement partiellement sur la partie conique (16) dudit corps central.

4. Tuyère selon la revendication 3, **caractérisée en ce qu'**une surface non ondulée de la partie conique (16) du corps central (4) comporte une pluralité de bras (30) sensiblement rectangulaires permettant d'augmenter l'amplitude du cisaillement radial entre lesdits flux primaire et secondaire, lesdits bras (30) s'étendant longitudinalement au-delà d'une extrémité libre de ladite partie conique du corps central dans le sens de leur longueur et radialement dans le sens de leur largeur, et s'entrecoupant sur ledit axe longitudinal (X-X) de la tuyère.

5. Tuyère selon la revendication 4, **caractérisée en ce que** lesdits bras (30) sont de mêmes longueurs et de mêmes largeurs et sont symétriques par rapport à l'axe longitudinal (X-X) de ladite tuyère.

6. Tuyère selon l'une des revendications 4 et 5, **caractérisée en ce que** lesdits bras (30) sont disposés dans le prolongement des ondulations négatives (26) de la seconde série d'ondulations.

7. Tuyère selon l'une quelconque des revendications 4 à 6, **caractérisée en ce que** lesdits bras (30) présentent, au niveau d'une extrémité libre, des moyens permettant de générer un cisaillement radial supplémentaire entre lesdits flux primaire et secondaire.

8. Tuyère selon la revendication 7, **caractérisée en ce que** lesdits moyens de cisaillement supplémentaire sont des fentes longitudinales (32) formant un angle avec l'axe longitudinal (X-X) de ladite tuyère tourné vers l'aval de celle-ci.

9. Tuyère selon la revendication 8, **caractérisée en ce que** lesdits bras (30) présentent chacun au moins quatre fentes (32) disposées deux à deux symétriquement par rapport à l'axe longitudinal (X-X) de ladite tuyère, les fentes (32a) les plus éloignées dudit axe longitudinal formant un angle avec celui-ci plus important que les fentes (32b) les plus proches dudit axe longitudinal de la tuyère.

10. Tuyère selon la revendication 7, **caractérisée en ce que** lesdits moyens de cisaillement supplémentaire sont des ailettes longitudinales (34) disposées perpendiculairement aux bras (30).

11. Tuyère selon la revendication 10, **caractérisée en ce que** lesdits bras (30) présentent chacun au moins deux ailettes (34) symétriques par rapport à l'axe longitudinal (X-X) de ladite tuyère.

12. Tuyère selon l'une quelconque des revendications 4 à 11, **caractérisée en ce que** lesdits bras (30) présentent au moins une torsion angulaire par rapport audit axe longitudinal (X-X) de la tuyère de façon à générer une giration de l'écoulement du flux primaire.

13. Tuyère selon l'une quelconque des revendications 1 à 12, **caractérisée en ce que** ladite extrémité libre (14) du capot primaire (6) comporte, en aval de ladite première série d'ondulations, une série de languettes permettant d'augmenter l'amplitude du cisaillement radial entre lesdits flux primaire et secondaire, ladite série de languettes étant formée de languettes négatives (36, 38) disposées dans le prolongement des ondulations négatives (20) de ladite première série d'ondulations en alternance avec des languettes positives (38, 42) disposées dans le prolongement des ondulations positives (22) de ladite première série d'ondulations.

14. Tuyère selon la revendication 13, **caractérisée en ce que** une extrémité libre desdites languettes négatives et positives est arrondie de façon à former des écopes (36, 38).

15. Tuyère selon la revendication 13, **caractérisée en ce que** une extrémité libre desdites languettes négatives et positives est pointue de façon à former des chevrons (40, 42).

16. Tuyère selon l'une quelconque des revendications 1 à 12, **caractérisée en ce que** les ondulations (26, 28) de ladite seconde série d'ondulations présentent une torsion angulaire par rapport audit axe longitudinal (X-X) de la tuyère de façon à générer une giration de l'écoulement du flux primaire.

17. Tuyère selon la revendication 16, **caractérisée en ce que** les ondulations (20, 22) de ladite première série d'ondulations présentent une torsion angulaire équivalente à celles des ondulations (26, 28) de ladite seconde série d'ondulations par rapport audit axe longitudinal (X-X) de la tuyère.

18. Tuyère selon l'une quelconque des revendications 1 à 12, **caractérisée en ce que** les ondulations négatives (20) et positives (22) de la première série d'ondulations comportent au moins une échancrure (44) ou au moins une ailette directrice (46) formant un angle avec l'axe longitudinal (X-X) de ladite tuyère de façon à générer une giration des écoulements des flux primaire et secondaire.

19. Tuyère selon l'une quelconque des revendications 1 à 18, **caractérisée en ce que** lesdites première et seconde séries d'ondulations sont chacune formées de huit ondulations négatives (20, 26) en alternance avec huit ondulations positives (22, 28).

## Claims

1. A turbomachine nozzle comprising:
a substantially cylindrical inner barrel (6) extending along a longitudinal axis (X-X) of said nozzle;
a centerbody (4) disposed concentrically inside said inner barrel and extending beyond a free end (14) of said inner barrel in the form of a substantially conical portion (16) so as to define between said inner barrel (6) and said centerbody (4) a first annular channel (10) for receiving a primary flow having a cross-section that is substantially constant around the entire circumference of said nozzle; and
an outer barrel (8) concentrically surrounding said inner barrel (6) so as to define a second annular channel (12) for a secondary flow;
said free end (14) of the inner barrel (6) presenting a surface (18) having a first series of undulations regularly distributed around said longitudinal axis (X-X) of the nozzle, said first series of undulations being formed by negative undulations (20) which extend radially inwards relative to said inner barrel, alternating with positive undulations (22) which extend radially outwards relative to said inner barrel;
said nozzle being **characterized in that** said centerbody (4) presents a second series of undulations at least in a portion (24) facing said undulating surface (18) at the free end (14) of the inner barrel (6), said second series of undulations being regularly distributed around said longitudinal axis (X-X) of the nozzle, said second series of undulations being made up of negative undulations (26) extending radially inwards relative to said centerbody, alternating with positive undulations (28) extending radially outwards relative to said centerbody, said negative and positive undulations (20, 26; 22, 28) of said first second series of undulations being of radial height that varies angularly and being disposed in such a manner that the negative undulations (20) of said first series of undulations are disposed facing negative undulations (26) of said second series of undulations, and vice versa, so as to generate turbulence and radial shear between said primary and secondary flows downstream from said undulations, while conserving a constant flow section around the entire circumference of said nozzle.

2. A nozzle according to claim 1, **characterized in that** the undulating surface (24) of the centerbody (4) extends longitudinally over the entire conical portion (16) of said centerbody.

3. A nozzle according to claim 1, **characterized in that** the undulating surface (24) of the centerbody (4) extends longitudinally over part of the conical portion (16) of said centerbody.

4. A nozzle according to claim 3, **characterized in that** a non-undulating surface of the conical portion (16) of the centerbody (4) includes a plurality of substantially rectangular arms (30) enabling the amplitude of the radial shear between said primary and secondary flows to be increased, said arms (30) extending longitudinally beyond a free end of said conical portion of the centerbody in the length direction thereof and radially in the width direction thereof, the arms intersecting on said longitudinal axis (X-X) of the nozzle.

5. A nozzle according to claim 4, **characterized in that** said arms (30) are of the same length and of the same width, and are symmetrical about the longitudinal axis (X-X) of said nozzle.

6. A nozzle according to claim 4 or claim 5, **characterized in that** said arms (30) are disposed in line with negative undulations (26) of the second series of undulations.

7. A nozzle according to any one of claims 4 to 6, **characterized in that** said arms (30) present means at a free end for generating additional radial shear between said primary and secondary flows.

8. A nozzle according to claim 7, **characterized in that** said additional shear means are longitudinal slots (32) forming an angle relative to the longitudinal axis (X-X) of said nozzle and facing downstream therefrom.

9. A nozzle according to claim 8, **characterized in that** each of said arms (30) presents at least four slots (32) disposed in pairs symmetrically about the longitudinal axis (X-X) of said nozzle, the slots (32a) further from said longitudinal axis forming an angle relative thereto that is greater than the angle formed by the slots (32b) closer to said longitudinal axis of the nozzle.

10. A nozzle according to claim 7, **characterized in that** said additional shear means are longitudinal fins (34) disposed perpendicularly to the arms (34).

11. A nozzle according to claim 10, **characterized in that** each of said arms (30) presents at least two fins (34) disposed symmetrically about the longitudinal axis (X-X) of said nozzle.

12. A nozzle according to any one of claims 4 to 11, **characterized in that** said arms (30) present at least one angular twist relative to said longitudinal axis (X-X) of the nozzle so as to generate swirling in the primary flow.

13. A nozzle according to any one of claims 1 to 12, **characterized in that** said free end (14) of the inner barrel (6) includes a series of tongues downstream from said first series of undulations, said tongues enabling the amplitude of the radial shear between said primary and secondary flows to be increased, said series of tongues being made up of negative tongues (36, 38) disposed in line with negative undulations (20) of said first series of undulations, alternating with positive tongues (38, 42) disposed in line with positive undulations (22) of said first series of undulations.

14. A nozzle according to claim 13, **characterized in that** the free ends of said negative and positive tongues are rounded so as to form U-shapes (36, 38).

15. A nozzle according to claim 13, **characterized in that** the free ends of said negative and positive tongues are pointed so as to form chevrons (40, 42).

16. A nozzle according to any one of claims 1 to 12, **characterized in that** the undulations (26, 28) of said second series of undulations presents angular twist relative to said longitudinal axis (X-X) of the nozzle so as to generate swirling in the primary flow.

17. A nozzle according to claim 16, **characterized in that** the undulations (20, 22) of said first series of undulations present angular twisting equivalent to that of the undulations (26, 28) of said second series of undulations relative to said longitudinal axis (X-X) of the nozzle.

18. A nozzle according to any one of claims 1 to 12, **characterized in that** each of the negative and positive undulations (20, 22) of the first series of undulations include at least one notch (44) or at least one deflector fin (46) forming an angle relative to the longitudinal axis (X-X) of said nozzle so as to generate swirling in the primary and secondary flows.

19. A nozzle according to any one of claims 1 to 18, **characterized in that** each of said primary and secondary series of undulations is formed by eight negative undulations (20, 26) alternating with eight positive undulations (22, 28).

## Patentansprüche

1. Düse einer Turbomaschine, umfassend:
eine im wesentlichen zylindrische Primärverkleidung (6), die sich entlang einer Längsachse (X-X) der Düse erstreckt,
einen mittleren Körper (4), der konzentrisch innerhalb der Primärverkleidung angeordnet ist und sich mit einem im wesentlichen konischen Teil (16) über ein freies Ende (14) der Primärverkleidung hinaus erstreckt, um zwischen der Primärverkleidung (6) und dem mittleren Körper (4) einen ersten ringförmigen Verdünnungskanal (10) für die Strömung eines Primärstroms zu definieren, der einen über den gesamten Umfang der Düse im wesentlichen konstanten Querschnitt aufweist, und
eine Sekundärverkleidung (8), die die Primärverkleidung (6) konzentrisch umgibt, um einen zweiten ringförmigen Verdünnungskanal (12) für die Strömung eines Sekundärstroms zu definieren,
wobei das freie Ende (14) der Primärverkleidung (6) eine Fläche (18) aufweist, die eine erste Reihe von um die Längsachse (X-X) der Düse gleichmäßig verteilten Wellen aufweist, wobei die erste Reihe von Wellen von negativen Wellen (20), die bezogen auf die Primärverkleidung radial nach innen verlaufen, im Wechsel mit positiven Wellen (22), die bezogen auf die Primärverkleidung radial nach außen verlaufen, gebildet ist,
wobei die Düse **dadurch gekennzeichnet ist, daß** der mittlere Körper (4) wenigstens im Bereich eines Teils (24) gegenüber der gewellten Fläche (18) des freien Endes (14) der Primärverkleidung (6) eine zweite Reihe von um die Längsachse (X-X) der Düse gleichmäßig verteilten Wellen aufweist, wobei die zweite Reihe von Wellen von negativen Wellen (26), die bezogen auf den mittleren Körper radial nach innen verlaufen, im Wechsel mit positiven Wellen (28), die bezogen auf den mittleren Körper radial nach außen verlaufen, gebildet ist, wobei die negativen (20, 26) und die positiven (22, 28) Wellen der ersten und zweiten Reihe von Wellen eine sich winkelmäßig ändernde radiale Höhe aufweisen und derart angeordnet sind, daß die negativen Wellen (20) der ersten Reihe von Wellen gegenüber den negativen Wellen (26) der zweiten Reihe von Wellen angeordnet sind sowie umgekehrt, um zwischen dem Primär- und dem Sekundärstrom, stromabwärts der Wellen, eine Turbulenz und eine radiale Scherung zu erzeugen und gleichzeitig einen über den gesamten Umfang der Düse konstanten Querschnitt beizubehalten.

2. Düse nach Anspruch 1, **dadurch gekennzeichnet, daß** die gewellte Fläche (24) des mittleren Körpers (4) sich in Längsrichtung über den gesamten konischen Teil (16) des mittleren Körpers erstreckt.

3. Düse nach Anspruch 1, **dadurch gekennzeichnet, daß** die gewellte Fläche (24) des mittleren Körpers (4) sich in Längsrichtung teilweise über den konischen Teil (16) des mittleren Körpers erstreckt.

4. Düse nach Anspruch 3, **dadurch gekennzeichnet, daß** eine nicht gewellte Fläche des konischen Teils (16) des mittleren Körpers (4) eine Vielzahl von im wesentlichen rechteckigen Armen (30) umfaßt, die ermöglichen, die Stärke der radialen Scherung zwischen dem Primär- und dem Sekundärstrom zu erhöhen, wobei die Arme (30) sich über ein freies Ende des konischen Teils des mittleren Körpers hinaus in der Richtung ihrer Länge längs und in der Richtung ihrer Breite radial erstrecken und sich an der Längsachse (X-X) der Düse schneiden.

5. Düse nach Anspruch 4, **dadurch gekennzeichnet, daß** die Arme (30) gleiche Längen und gleiche Breiten aufweisen und in Bezug auf die Längsachse (X-X) der Düse symmetrisch sind.

6. Düse nach einem der Ansprüche 4 und 5, **dadurch gekennzeichnet, daß** die Arme (30) in der Verlängerung der negativen Wellen (26) der zweiten Reihe von Wellen angeordnet sind.

7. Düse nach einem der Ansprüche 4 bis 6, **dadurch gekennzeichnet, daß** die Arme (30) im Bereich eines freien Endes Mittel aufweisen, die ermöglichen, eine zusätzliche radiale Scherung zwischen dem Primär- und dem Sekundärstrom zu erzeugen.

8. Düse nach Anspruch 7, **dadurch gekennzeichnet, daß** die Mittel zur zusätzlichen Scherung Längsschlitze (32) sind, die mit der Längsachse (X-X) der Düse einen stromabwärts dieser gerichteten Winkel bilden.

9. Düse nach Anspruch 8, **dadurch gekennzeichnet, daß** die Arme (30) jeweils wenigstens vier Schlitze (32) aufweisen, die paarweise symmetrisch zu der Längsachse (X-X) der Düse angeordnet sind, wobei die von der Längsachse am weitesten entfernten Schlitze (32a) mit dieser einen größeren Winkel bilden als die der Längsachse der Düse am nächsten gelegenen Schlitze (32b).

10. Düse nach Anspruch 7, **dadurch gekennzeichnet, daß** die Mittel zur zusätzlichen Scherung zu den Armen (30) senkrecht angeordnete Längsrippen (34) sind.

11. Düse nach Anspruch 10, **dadurch gekennzeichnet, daß** die Arme (30) jeweils wenigstens zwei Rippen (34) aufweisen, die zu der Längsachse (X-X) der Düse symmetrisch sind.

12. Düse nach einem der Ansprüche 4 bis 11, **dadurch gekennzeichnet, daß** die Arme (30) wenigstens eine Winkelverdrehung gegenüber der Längsachse (X-X) der Düse aufweisen, um einen Drall der Strömung des Primärstroms zu erzeugen.

13. Düse nach einem der Ansprüche 1 bis 12, **dadurch gekennzeichnet, daß** das freie Ende (14) der Primärverkleidung (6) stromabwärts der ersten Reihe von Wellen eine Reihe von Zungen umfaßt, die ermöglichen, die Stärke der radialen Scherung zwischen dem Primär- und dem Sekundärstrom zu erhöhen, wobei die Reihe von Zungen von negativen Zungen (36, 40), welche in der Verlängerung der negativen Wellen (20) der ersten Reihe von Wellen angeordnet sind, im Wechsel mit positiven Zungen (38, 42), welche in der Verlängerung der positiven Wellen (22) der ersten Reihe von Wellen angeordnet sind, gebildet ist.

14. Düse nach Anspruch 13, **dadurch gekennzeichnet, daß** ein freies Ende der negativen und positiven Zungen abgerundet ist, um Schöpfkellen (36, 38) zu bilden.

15. Düse nach Anspruch 13, **dadurch gekennzeichnet, daß** ein freies Ende der negativen und positiven Zungen zugespitzt ist, um Spitzkörper (40, 42) zu bilden.

16. Düse nach einem der Ansprüche 1 bis 12, **dadurch gekennzeichnet, daß** die Wellen (26, 28) der zweiten Reihe von Wellen eine Winkelverdrehung gegenüber der Längsachse (X-X) der Düse aufweisen, um einen Drall der Strömung des Primärstroms zu erzeugen.

17. Düse nach Anspruch 16, **dadurch gekennzeichnet, daß** die Wellen (20, 22) der ersten Reihe von Wellen eine Winkelverdrehung aufweisen, die zu denjenigen der Wellen (26, 28) der zweiten Reihe von Wellen gegenüber der Längsahse (X-X) der Düse äquivalent ist.

18. Düse nach einem der Ansprüche 1 bis 12, **dadurch gekennzeichnet, daß** die negativen (20) und positiven (22) Wellen der ersten Reihe von Wellen wenigstens eine Aussparung (44) oder wenigstens eine Leitrippe (46) umfassen, die mit der Längsachse (X-X) der Düse einen Winkel bildet, um einen Drall der Strömungen des Primär- und des Sekundärstroms zu erzeugen.

19. Düse nach einem der Ansprüche 1 bis 18, **dadurch gekennzeichnet, daß** die erste und die zweite Reihe von Wellen jeweils von acht negativen Wellen (20, 26) im Wechsel mit acht positiven Wellen (22, 28) gebildet sind.
